# EUROPÄISCHE PATENTSCHRIFT

(11) **EP 0 308 455 B1**
(45) Veröffentlichungstag und Bekanntmachung des Hinweises auf die Patenterteilung: **27.01.1993**
(21) Anmeldenummer: 88902847.8
(22) Anmeldetag: 31.03.1988
(51) Int. Cl.: G01N 33/00, B60H 1/24

(54) **SCHALTUNGSANORDNUNG ZUR AUSWERTUNG DER VON EINEM HALBLEITERGASSENSOR ERZEUGTEN SIGNALE**
CIRCUIT ARRANGEMENT FOR EVALUATING A SIGNAL PRODUCED BY A SEMICONDUCTOR SENSOR
CIRCUIT D'EVALUATION DE SIGNAUX GENERES PAR DES CAPTEURS DE GAZ A SEMICONDUCTEURS

(30) Priorität: 02.04.1987 CH 1306/87; 02.04.1987 CH 1308/87
(43) Veröffentlichungstag der Anmeldung: 29.03.1989
(73) Patentinhaber: EFTAG ENTSTAUBUNGS- UND FÖRDERTECHNIK AG, CH-2500 Biel 3 (CH)
(72) Erfinder: HÖLTER, Heinz, D-4390 Gladbeck (DE); RUMP, Hanns, D-4750 Unna-Massen (DE); VIETZE, Helmut, CH-8500 Frauenfeld (CH)
(74) Vertreter: Spalthoff, Adolf, Dipl.-Ing.
(86) Internationale Anmeldenummer: EP8800269
(87) Internationale Veröffentlichungsnummer: WO8807678

(56) Entgegenhaltungen:
- EP-A- 0 070 941
- EP-A-00 211 90
- WO-A-70/0634
- DE-A-33 043 24
- PATENT ABSTRACTS OF JAPAN, Band 9, Nr. 250 (P-394)(1973) 8.Oktober 1985;& JP-A- 60100750
- PATENT ABSTRACTS OF JAPAN, Band 7, Nr. 30 (P-173)(1175) 5 Februar 1983;& JP-A-57182153

## Beschreibung

Die Erfindung bezieht sich auf eine Schaltungsanordnung zur Auswertung der von einem Halbleitergassensor erzeugten Signale nach dem Oberbegriff des Patentanspruchs 1 bzw. des Patentanspruchs 7.

Aus der JP-A-57-182 153 ist eine Schaltungsanordnung zur Auswertung der von einem Halbleitergassensor erzeugten Signale bekannt, bei der zum Aufbau der Sensorspannung ein geschalteter Spannungsteiler benutzt wird, der aus einem ersten Widerstand und dem Spannungsausgang eines ersten Komparators besteht. Dieser Spannungsausgang hat eine sägezahnartige Form, da der Komparator als Bestandteil eines Integrationskreises geschaltet ist. Die Schaltspannung ergibt sich bei der bekannten Schaltungsanordnung aus der Teilerspannung dreier weiterer Widerstände und dem Ausgangssignal zweier weiterer Komparatoren. Die Teilerspannung der Widerstände ist in der genannten Druckschrift mit A und B bezeichnet, wobei die Teilerspannung A einer Spannung entspricht, die am Sensorspannungsteiler bei kontaminierter Luft entsteht, wohingegen die Teilerspannung B einer Spannung entspricht, die bei sauberer Luft und bei durchschnittlicher Feuchte auftritt. Während der eine der weiteren Komparatoren nur schalten kann, wenn eine erhebliche Kontaminierung eingetreten ist, schaltet der andere der weiteren Komparatoren, wenn sich die Sensorspannung C irgendwo zwischen den Teilerspannungen A und B befindet, wobei die Ausgangsspannung des ersten Komparators auch zwischen den Teilerspannungen A und B liegt. Der Sensorspannungsteiler erhält seine Spannung aus einem Operationsverstärker und einem dritten Widerstand. Der sich ergebende Strom im Kreis errechnet sich aus der angebotenen Spannung, dem Innenwiderstand des Sensors und dem ersten Widerstand. Mittels dieser Beschaltung wird sichergestellt, daß die Spannung C am Sensor prinzipiell etwa der Teilerspannung B der weiteren drei Widerstände entspricht, wobei der Strom im Sensorzweig mit dem Sensorwiderstand variiert.

Mit dieser Schaltungsanordnung, mit der der Zweck verfolgt wird, die üblicherweise aufgrund von Temperatureinflüssen auftretende Drift aufzufangen bzw. zu kompensieren, können nur vergleichsweise geringe Parameterspannweiten kompensiert werden; hierzu wird darauf verwiesen, daß z.B. der Faktor der auf Temperatureinflüssen beruhenden Änderung des Widerstands des bei der erfindungsgemäßen Schaltungsanordnung eingesetzten Halbleitergassensors etwa 0,2 beträgt, während der Faktor der auf einem unterschiedlichen Schadstoffgehalt in der Luft beruhenden Änderung des Widerstands des bei der erfindungsgemäßen Schaltungsanordnung eingesetzten Halbleitergassensors je nach Verkehrslage ca. 4,0 beträgt, womit er in einer anderen Größenordnung liegen dürfte. Eine derartige Parameterspannweite ist mittels der aus der genannten JP-A-57-182 153 bekannten Schaltungsanordnung nicht kompensierbar.

Der Erfindung liegt die Aufgabe zugrunde, eine Schaltungsanordnung für einen Halbleitergassensor zu schaffen, mittels der außer der Kompensation von Nebenparametern, wie Luftfeuchtigkeit, Temperatur etc., auch eine Anpassung der Schaltschwelle entsprechend einer Änderung des Ausgangsniveaus des zu erfassenden Hauptparameters, nämlich der Schadstoffbelastung der Luft, möglich ist.

Diese Aufgabe wird erfindungsgemäß durch die Merkmale im kennzeichnenden Teil des Patentanspruchs 1 bzw. im kennzeichnenden Teil des Patentanspruchs 7 gelöst.

Erfindungsgemäß wird ein Zeitglied mit einer großen Zeitkonstante verwendet, um ein Integral der Sensorspannung zu ermitteln, welches als Grundlage für die Anpassung der Schaltschwelle dient. Das Zeitglied selbst kann durch eine Kombination aus Widerstand und Kondensator oder durch eine Integrationsschaltung ausgebildet werden.

Vorteilhafte Ausgestaltungen der Erfindung ergeben sich aus den Unteransprüchen.

Ausführungsbeispiele der Erfindung sind an Hand der Zeichnungen näher erläutert, und zwar zeigt:
- Figur 1: das Blockschaltbild einer ersten Ausführungsform,
- Figur 2: das Blockschaltbild einer zweiten Ausführungsform,
- Figur 3: das Blockschaltbild einer dritten Ausführungsform und
- Figur 4: ein Diagramm über die Arbeitsweise des Blockschaltbildes nach Figur 3.

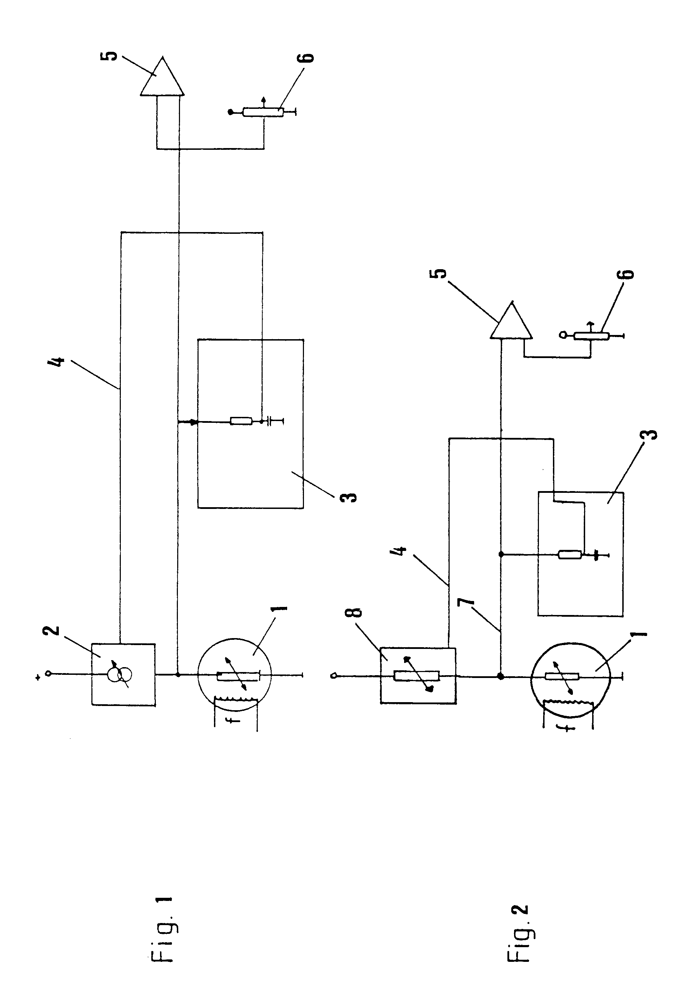

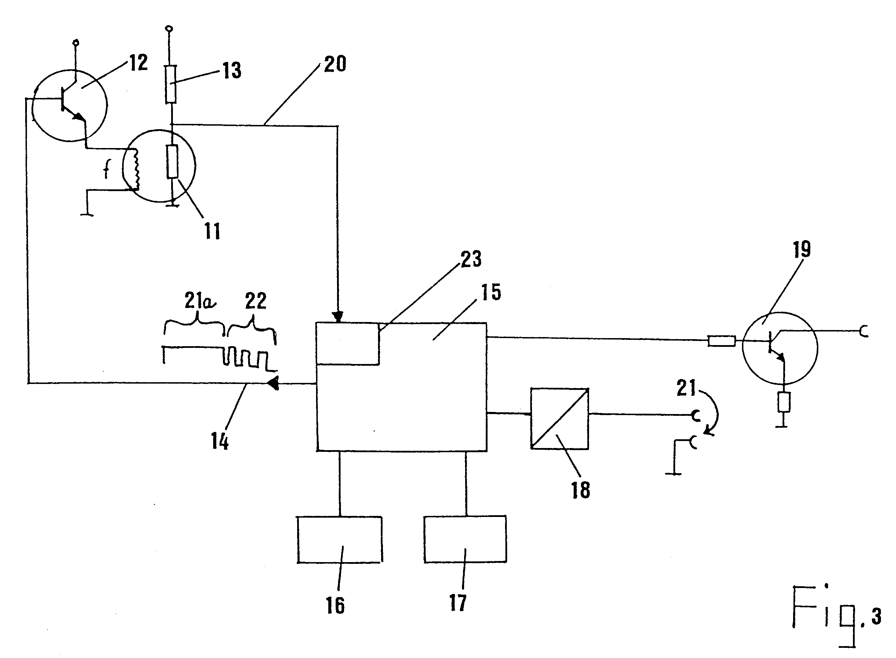

Bei den Ausführungen gemäß Figur 1 und 2 ist ein Halbleitergassensor 1 in Reihe mit einer Konstantstromquelle 2 geschaltet. Das sich ergebende Sensorsignal 7 wird einmal auf den Eingang eines Komparators 5 gegeben, zum anderen über eine Integrationsschaltung 3 geführt, so daß am Ausgang dieser Integrationsschaltung (3) ein integriertes Sensorsignal 4 erscheint.

Bei konstanter Spannung am Halbleitergassensor 1 wird nach einiger Zeit die durch das Sensorsignal 7 angezeigte Spannung mit derjenigen Spannung, die dem integrierten Sensorsignal 4 entspricht, identisch sein. Dieses integrierte Sensorsignal 4 wird als Störgrößenaufschaltung auf die Konstantstromquelle 2 gegeben, wobei die Wirkrichtung so ist, daß sich der Konstantstrom immer dann erhöht, wenn das integrierte Sensorsignal 4 kleiner als ein vorgegebener Betrag ist.

Ergebnismäßig wird erreicht, daß sich die Schaltungsanordnung versucht, das Sensorsignal 7 auf einem bestimmten Niveau zu halten.

Erfahrungsgemäß treten impulsartige Schadstoffspitzen im Straßenverkehr vorwiegend im Ampelstau, Tunnel, in der Tiefgarage oder ähnlichen Ausnahmesituationen auf. Andere Einflüsse, z.B. Ortsbelastung, Temperatur, Feuchte usw. ändern sich dagegen äußerst langsam.

Wenn die Zeitkonstante der Integrationsschaltung 3 deutlich größer ist als der Zeitraum, in dem üblicherweise impulsartige Schadstoffspitzen auftreten, erkennt der Komparator 5 zuverlässig diese Schadstoffspitzen und schaltet, wobei die Schaltschwelle bzw. der Schaltpunkt mittels eines einstellbaren Spannungsteilers 6 gewählt werden kann, der auch als Festwiderstands-Kombination ausgeführt sein kann.

In einer zweiten Ausführungsform, die in Figur 2 dargestellt ist, wird die Konstantstromquelle durch einen regelbaren Widerstand 8, z.B. einen FET-Transistor, ersetzt, der im Regelkreis angeordnet ist. Die Wirkung ist vergleichbar. Die Schaltungsanordnung versucht die Spannung im Spannungsteiler 1, 8 konstant zu halten, wobei die Zeitverzögerung greift.

Der Schaltpunkt bzw. die Schaltschwelle des Komparators 5 wird unabhängig vom Niveau der ihn beeinflussenden Parameter so gesteuert, daß immer dann ein Schaltsignal für Umluftklappen und/oder klimatechnische Anlagen eines Kraftfahrzeugs ausgelöst wird, wenn eine Veränderung des Schadstoffgehalts der Außenluft in Form einer impulsartigen Schadstoffspitze erfolgt, deren Anstieg schneller erfolgt als es der Zeitkonstante der Integrationsschaltung 3 entspricht.

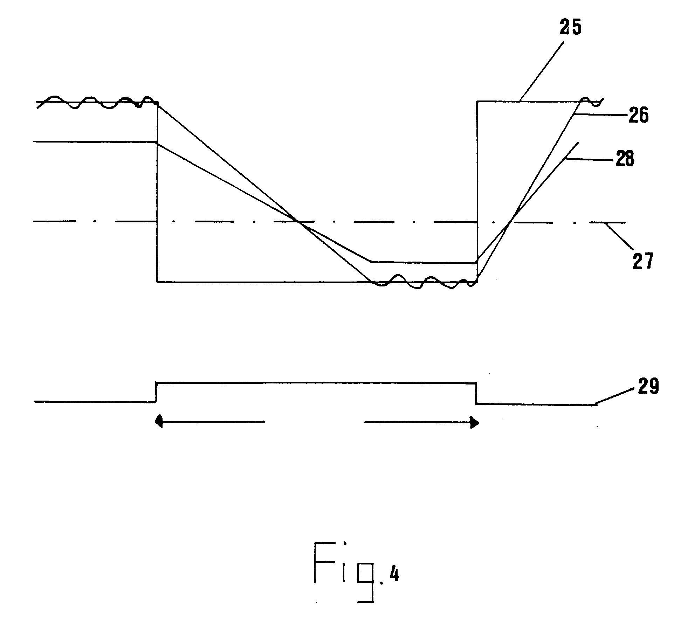

Bei dem Ausführungsbeispiel nach Figur 3 bildet ein Halbleitergassensor 11 einen Spannungsteiler mit einem Widerstand 13. Es bildet sich ein Sensorsignal 20 für die Sensorspannung. Der Widerstand 13 kann mit gleichem Ergebnis durch eine Konstantstromquelle ersetzt werden. Das Sensorsignal 20 wird von einem Analog-Digital-Wandler 23 digitalisiert, der Bestandteil eines Mikroprozessors 15 ist. Das Programm des Mikroprozessors 15 ist fest in einem ROM 17 gespeichert. Der Mikroprozessor 15 gibt ein Schaltsignal auf einen Transistor mit Open-Kollektor-Ausgang 19. Alternativ oder gleichzeitig kann ein Analogsignal 21 herausgegeben werden, das vom Mikroprozessor 15 in einem Digital-Analog-Wandler 18 gebildet wird. Diese Schaltungsanordnung soll vorzugsweise im Kraftfahrzeugbereich verwendet werden, bei dem die Bordspannung üblicherweise 12 Volt beträgt.

Die Mehrzahl der Halbleitergassensoren muß geheizt werden, wobei die Heizleistung sehr genau eingehalten werden muß und die Heizspannung normalerweise 5 Volt beträgt.

Wenn die derart konstante Heizspannung mit Hilfe eines Stabilisators erzeugt würde, entstünde eine erhebliche Verlustwärme. Deshalb wird die Heizleistung gewonnen, indem mit Hilfe eines Schalttransistors 12 eine höhere Spannung als die konstante Heizspannung in einem Verhältnis getaktet wird, daß effektiv die gleiche Heizleistung erzeugt wird, als ob der Halbleitergassensor 11 mit einem 5 Volt-Gleichstrom geheizt würde. In einer bevorzugten Ausführungsform wird die 12 Volt-Bordspannung mit Hilfe eines Stabilisators auf 8 Volt stabilisiert.

Das Programm des Mikroprozessors 15 schaltet den Schalttransistor 12 nach dem Einschalten leitend, so daß der Halbleitergassensor 11 über eine beliebig einstellbare Zeit - in der bevorzugten Ausführungsform 30 bis 60 sec - mit einer fast doppelt so großen Heizleistung beheizt wird, als im Betrieb üblich. Der Vorteil dieser Vorheizung ist, daß sich der Halbleitergassensor 11 sehr schnell selbst reinigt, also betriebsfähig ist. Nach Ablauf dieser Vorheizungszeit erzeugt das Programm einen Takt, dessen Teilungsverhältnis so bemessen ist, daß die effektive Heizleistung dem Datenblatt des Halbleitergassensors 11 entspricht.

Das Programm wartet jetzt eine weitere, ebenfalls frei wählbare Zeit ab, bis der Halbleitergassensor 11 seinen Normalbetrieb aufnimmt. Danach vergleicht das Programm, ob die durch den Analog-Digital-Wandler 23 erfaßte Sensorspannung einen zu hohen Schadstoffgehalt der Außenluft signalisiert. Ein derartiges Signal erfolgt, sofern die erfaßte Sensorspannung größer ist als ein im Mikroprozessor 15 vorgegebener Referenzwert. Geschieht dies, wird der Open-Kollektor-Ausgang 19 aktiviert.

Gleichzeitig bildet das Programm des Mikroprozessors 15 einen Mittelwert (Integral) aus dem die Sensorspannung angebenden Sensorsignal 20. In einer relativ langsamen Zeitschleife wird der Referenzwert und damit der Schaltpunkt des Open-Kollektor-Ausgangs an den sich ändernden Mittelwert des Sensorsignals 20 angepaßt. In der bevorzugten Ausführungsform ist die Geschwindigkeit der Anpassung des Schaltpunkts an den sich ändernden Mittelwert unabhängig von der Höhe der jeweils aktuellen Sensorspannung. Vom Programm wird lediglich geprüft, ob die aktuelle Sensorspannung größer als der intern gebildete Mittelwert ist. Entspricht der Mittelwert nicht der aktuellen Sensorspannung, wird vom Register jeweils 1 Bit vom Mittelwert abgezogen bzw. hinzuaddiert. Vereinfacht gesagt folgt der Mittelwert sehr stark zeitverzögert der Sensorspannung. Da erfahrungsgemäß Schadstoffspitzen zeitlich begrenzt und mit einem sehr hohen Gradienten auftreten, führen sie in der Schaltungsanordnung zu einer Auslösung des Schaltkontaktes. Langsame, schleichende Parameteränderungen dagegen, wie sie durch Ånderungen der Feuchte, Temperatur und Ortsbelastung mit Schadstoffen hervorgerufen werden, werden vom Mikroprozessor 15 gelernt und zur Anpassung des Schaltpunkts benutzt.

Das Programm kann so gestaltet werden, daß bei Schadstoffspitzen, deren Gradient größer als ein vorgegebener Gradient ist, die Lerngeschwindigkeit des Mikroprozessors verlangsamt wird. Dadurch wird erreicht, daß bei gehäuft auftretenden Schadstoffspitzen die Empfindlichkeit der Schaltungsanordnung nicht unzulässig verändert wird.

Wird ein bestimmter Schadstoffgehalt in der Außenluft überschritten, bei dem eine objektive Gesundheitsgefährdung vorliegt, wird das Lernen des Mikroprozessors 15 unterbrochen. Bei Überschreiten dieses Schadstoffgehaltes werden die Umluftklappen stets geschlossen bleiben.

Die meisten Kalbleitergassensoren haben eine exponentielle Kennlinie. Daraus folgt, daß bei sehr gering verschmutzter bzw. sauberer Außenluft der Einfluß schon geringer Schadstoffmengen zu einer relativ hohen Änderung der Sensorspannung führt. Bei höherer Ortsbelastung der Außenluft wird die Kennlinie des Halbleitergassensors flacher, was dazu führt, daß gleiche Änderungen des Schadstoffgehalts zu deutlich geringeren Änderungen der Sensorspannung führen.

Dies wird dadurch berücksichtigt, daß der Schaltpunkt dem durch die aktuellen Sensorspannungen gebildeten Mittelwert nicht parallel folgt. Vielmehr verringert sich der Abstand zwischen dem Mittelwert und dem Schaltpunkt mit zunehmender Schadstoffbelastung, wobei der Zusammenhang ein linearer oder nichtlinearer sein kann.

Mit dieser Maßnahme wird erreicht, daß bei zunehmender Ortsbelastung die Empfindlichkeit gegenüber impulsartigen Schadstoffspitzen stets gleich bleibt; außerdem wird bei unbelasteter Luft die Empfindlichkeit der Schaltungsanordnung deutlich gesteigert. Da der Abstand zwischen Mittelwert und Schaltpunkt etwas größer wird, schließt die Klappe erst dann, wenn ein objektiv und subjektiv störender Schadstoffgehalt erreicht wird.

In einer weiteren Ausführungsform ist die Lerngeschwindigkeit des Mikroprozessors 15 in den ersten Minuten nach Inbetriebnahme besonders hoch, damit eventuelle Extrem-Situationen besonders schnell erkannt werden.

In einem getrennten Programmteil wird die Lerngeschwindigkeit noch einmal deutlich verlangsamt. Die Differenz zwischen diesem extrem integrierten Signal und der Sensorspannung soll dazu dienen, den Sensorpegel anzeigen zu können. Daher wird dieses Signal über den Digital-Analog-Wandler 18 herausgegeben und kann an beliebigen Anzeigen angezeigt werden.

Da das intern gebildete, gelernte Signal zeitweise höher sein kann als das Sensorsignal (Beispiel: Fahrt durch einen sehr langen Tunnel mit hoher Ortsbelastung), wird sichergestellt, daß niemals "negative" Pegel gebildet werden können. Das Programm ist daher so ausgebildet, daß die interne Vergleichsgröße jeder Verbesserung der Luftsituation, die durch die Sensorspannung signalisiert wird, sehr schnell oder sogar unmittelbar folgt.

Die Veränderung des internen Schaltpegels (Referenzpegels) wird nicht konstant, sondern in Abhängigkeit vom vorliegenden, mittleren Sensorpegel geführt. Dies wird dadurch gelöst, daß ein mittlerer Sensorpegel als Referenz-Hilfspegel gebildet wird. Der tatsächliche Schaltpegel wird nach einem Algorithmus gebildet, der sich aus einem Mittelwert zwischen dem eben erwähnten Referenzpegel und dem Pegel errechnet, der zur permanenten Schließung der Klappe führt.

Im RAM 16 werden die Rechengrößen zwischengespeichert, d.h. also die Werte, die sich bei der Integration als Rechenwerte ergeben.

Aus dem Diagramm nach Figur 4 ist die Arbeitsweise der Schaltungsanordnung ersichtlich.

Die Kurve 25 ist eine gedachte Sensorspannung, die Rechteckcharakter hat. Die Kurve 26 stellt den internen Referenzpegel dar, der im Anfang identisch mit der Kurve 25 ist, dieser in einer linearen Funktion folgt, sie zeitlich später erreicht, und nachdem die Kurve 25 wieder angestiegen ist, dieser ebenfalls nachfolgt, um sie dann wieder zu erreichen.

Die Linie 27 stellt denjenigen Pegel dar, ab dem die Klappe stets geschlossen sein soll. Der tatsächliche Schaltpegel errechnet sich aus einem beliebig gewichteten Wert aus der Kurve 25 und 26 und ist in der Zeichnung als Kurve 28 dargestellt. Die Kurve 29 zeigt, wann - daraus folgend - die Klappe geschlossen ist.

Die Lage der Kurve 27 kann beliebig gesetzt werden. Das Verhältnis, das aus den Kurven 27 und 26 gebildet wird, kann eine beliebige Proportionalität haben.

Die Schließzeit der Klappe wird nach einer frei einstellbaren Zeit aufgehoben, damit eine gesundheitliche Gefährdung der Insassen wegen Sauerstoffmangel nicht eintreten kann. Außerdem ist die Zeit abhängig von der Kabinengröße. Diese Beendigung der Schließzeit erweist sich auch als vorteilhaft zur Aktivierung, damit ein Frischluftimpuls erreicht wird, um die Kabine zu spülen. Mit 21a ist der konstante Schaltpegel "Heizung ein" nach dem Start des Programms bezeichnet und mit 22 die getaktete Heizung.

Mit 14 ist der Taktausgang des Mikroprozessors 15 zur Heizung bezeichnet.

## Patentansprüche

1. Schaltungsanordnung zur Auswertung der von einem Halbleitergassensor (1) erzeugten Signale, bei der der Halbleitergassensor (1) einen Spannungsteiler mit einer Stromquelle (2) bildet, die in Abhängigkeit von der Sensorspannung steuerbar ist, dadurch gekennzeichnet, daß der Strom der Stromquelle (2) in Abhängigkeit von der Sensorspannung derart einstellbar ist, daß die Sensorspannung auf einem bestimmten Niveau gehalten wird, wobei zur Steuerung der Stromquelle (2) diese mit einer Integrationsschaltung (3) für die Sensorspannung verbunden ist, die eine im Vergleich zu der Zeit, in der üblicherweise impulsartige Schadstoffspitzen auftreten, große Zeitkonstante aufweist, und daß die Schaltungsanordnung an die Umluftklappen von Kraftfahrzeugen und/oder deren klimatechnische Anlagen angeschlossen ist.

2. Schaltungsanordnung nach Anspruch 1, bei der der Halbleitergassensor (1) einen Spannungsteiler mit einem elektronisch regelbaren Widerstand (8) bildet.

3. Schaltungsanordnung nach Anspruch 1 oder 2, bei der die Integrationsschaltung (3) aus einer Widerstands-/Kondensator-Kombination besteht.

4. Schaltungsanordnung nach einem der Ansprüche 1 - 3, bei der die Integrationsschaltung (3) digital ausgebildet ist und einen gesteuerten Vorwärts-/Rückwärts-Zähler mit nachgeschaltetem Digital-Analog-Wandler aufweist.

5. Schaltungsanordnung nach einem der Ansprüche 1 - 4, bei der die Integrationsschaltung (3) zeitabhängig schaltbare, gesteuerte Strom- oder Spannungsquellen aufweist.

6. Schaltungsanordnung nach einem der Ansprüche 1 - 5, bei der der Schaltpunkt eines Komparators (5), in den ein der Sensorspannung entsprechendes Sensorsignal (7) eingegeben wird, über einen fest eingestellten oder einstellbaren Spannungsteiler (6) beliebig festlegbar ist.

7. Schaltungsanordnung zur Auswertung der von einem Halbleitergassensor (11) erzeugten Signale, bei der der Kalbleitergassensor (11) einen Spannungsteiler mit einer Stromquelle (13) bildet, dadurch gekennzeichnet, daß das Sensorsignal in einem Analog-Digital-Wandler (23) digitalisiert und einem Mikroprozessor (15) zugeführt wird, der das digitalisierte Sensorsignal mit einem vorgegebenen, in einem Register gespeicherten Referenzwert vergleicht und ein Schaltsignal erzeugt, wenn das digitalisierte Sensorsignal den Referenzwert überschreitet, wobei der Referenzwert in Abhängigkeit vom digitalisierten Sensorsignal verändert wird, indem in einer Zeitschleife jeweils 1 Bit hinzugefügt oder abgezogen wird, so daß durch Integration des digitalisierten Sensorsignals über einen einige Minuten bis zu einigen Stunden betragenden Zeitraum ein Mittelwert des digitalisierten Sensorsignals als Referenzwert fungiert und daß die Schaltungsanordnung an die Umluftklappen von Kraftfahrzeugen und/oder deren klimatechnische Anlagen angeschlossen ist.

8. Schaltungsanordnung nach Anspruch 7, bei der bei Anlaufbetrieb des Halbleitergassensors (11) ein Ausgang des Mikroprozessors (15) einen Schalttransistor (12) permanent schaltet, wodurch einer Heizung des Halbleitergassensors (11) eine Leistung zugeführt wird, die größer als die Betriebsnennheizleistung des Halbleitergassensors (11) ist, wobei nach einer vorgegebenen Zeitspanne dieser Ausgang getaktet wird und das Teilungsverhältnis des Taktes so gewählt ist, daß die Betriebsnennheizleistung des Halbleitergassensors (11) erreicht wird.

9. Schaltungsanordnung nach Anspruch 7 oder 8, bei der bei Überschreiten eines vorgegebenen Schadstoffgehalts der Außenluft die Nachführung des Referenzwerts ausgesetzt wird und ein die Umluftklappen und/oder klimatechnischen Anlagen schaltender Open-Kollektor-Ausgang (19) eingeschaltet bleibt.

10. Schaltungsanordnung nach einem der Ansprüche 7 - 9, bei der ein interner Schaltpunkt nicht in einem festgesetzten Abstand zum Referenzwert liegt, sondern daß sich dieser Abstand zwischen Schaltpunkt und Referenzwert mit zunehmender Ortsbelastung der Außenluft mit Schadstoff entsprechend der gekrümmten Kennlinie des Halbleitergassensors (11) verringert.

11. Schaltungsanordnung nach einem der Ansprüche 7 - 10, bei der bei Überschreiten oder Unterschreiten bestimmter Sensorsignale eine Störmeldung ausgelöst wird, die Kurzschluß oder Unterbrechung der Sensorleitung signalisiert.

12. Schaltungsanordnung nach einem der Ansprüche 7 - 11, bei der die Schließung der Umluftklappen und/oder klimatechnischen Anlagen nach einer frei einstellbaren Zeit aufgehoben wird.

## Claims

1. Circuit for evaluating the signals produced by a semiconductor gas sensor (1) in which the semiconductor gas sensor (1) forms a voltage divider with a current source (2) which is controllable in dependence on the sensor voltage, characterised in that the current from the current source (2) is adjustable in dependence on the sensor voltage in a manner such that the sensor voltage is kept at a certain level and, in order to control the current source (2), the latter is connected to a sensor-voltage integrating circuit (3) which has a large time constant in comparison with the period of time during which pulse-like pollution peaks normally appear, and in that the circuit is connected to the air-circulation shutters and/or to the air-conditioning equipment of motor-vehicles.

2. Circuit according to Claim 1, in which the semiconductor gas sensor (1) forms a voltage divider with an electronically variable resistor (8).

3. Circuit according to Claim 1 or Claim 2, in which the integrating circuit (3) consists of a resistor/capacitor combination.

4. Circuit according to one of Claims 1-3, in which the integrating circuit (3) is digital and has a controlled bidirectional counter the output of which is connected to a digital to analogue converter.

5. Circuit according to one of Claims 1-4, in which the integrating circuit (3) has time-dependently switchable, controlled current- or voltage-sources.

6. Circuit according to one of Claims 1-5, in which the switching point of a comparator (5), to which a sensor signal (7) corresponding to the sensor voltage is supplied, can be set at will by means of a fixed or adjustable voltage divider (6).

7. Circuit for evaluating the signals produced by a semiconductor gas sensor (11) in which the semiconductor gas sensor (11) forms a voltage divider with a current source (13), characterised in that the sensor signal is digitised in an analogue-digital converter (23) and is sent to a microprocessor (15) which compares the digitised sensor signal with a predetermined reference value stored in a register and produces a switching signal if the digitised sensor signal exceeds the reference value, the reference value being altered, in dependence on the digitised sensor signal, by the addition or subtraction of 1 bit in each time loop, so that a mean digitised sensor-signal value obtained by the integration of the ditigised sensor signal over a period of from a few minutes up to a few hours acts as the reference value, and in that the circuit is connected to the air-circulation shutters and/or to the air-conditioning equipment of motor vehicles.

8. Circuit according to Claim 7 in which, when the semiconductor gas sensor (11) starts to operate, an output of the microprocessor (15) switches on a switching transistor (12) continuously so that a heater for the semiconductor gas sensor (11) is supplied with energy greater than the nominal operative heat-absorption of the semiconductor gas sensor (11) and, after a predetermined period of time, the output is pulsed, the division of the pulsed signal being selected in a manner such as to attain the nominal operative heat-absorption of the semiconductor gas sensor (11).

9. Circuit according to Claim 7 or Claim 8, in which, when a predetermined pollutant content of the external air is exceeded the readjustment of the reference value is interrupted and an open-collector output (19), which switches the air-circulation shutters and/or the air-conditioning equipment, remains switched on.

10. Circuit according to one of Claims 7-9 in which an internal switching point is not separated from the reference value by a fixed interval, but the interval between the switching point and the reference value decreases as the local external air pollution increases, in accordance with the curved characteristic of the semiconductor gas sensor (11).

11. Circuit according to one of Claims 7-10 in which, when the sensor signal exceeds or falls below certain values a malfunction message is triggered, indicating a short-circuit or a break in the sensor wiring.

12. Circuit according to one of Claims 7-11 in which the closure of the air-circulation shutters and/or the closing-down of the air-conditioning equipment is reversed after a period of time which can be adjusted at will.

## Revendications

1. Circuit de traitement des signaux produits par un détecteur de gaz à semi-conducteur (1), dans luel le détecteur de gaz à semi-conducteur (1) forme un diviseur de tension avec une source de courant (2) qui est commandée en fonction de la tension du détecteur, caractérisé par le fait que le courant de la source de courant (2) peut être réglé en fonction de la tension du détecteur de manière telle que ladite tension soit maintenue à un niveau donné, la source de courant (2), pour sa commande, étant reliée à un circuit intégrateur (3) de la tension du détecteur qui présente une grande constante de temps par rapport au laps de temps au cours duquel apparaissent normalement des pics impulsionnels de substances polluantes et que le circuit est connecté aux volets de circulation d'air de véhicules automobiles et/ou de leur installation de climatisation.

2. Circuit selon la revendication 1, dans lequel le détecteur de gaz à semi-conducteur (1) forme un diviseur de tension avec une résistance (8) à réglage électronique.

3. Circuit selon la revendication 1 ou 2, dans lequel le circuit intégrateur (3) est constitué par une combinaison résistance/condensateur.

4. Circuit selon l'une des revendications 1 à 3, dans lequel le circuit intégrateur (3) est numérique et comporte un compteur/décompteur suivi d'un convertisseur numérique/analogique.

5. Circuit selon l'une des revendications 1 à 4, dans lequel le circuit intégrateur (3) comporte des sources de courant et de tension commandées qui sont mises en circuit en fonction du temps.

6. Circuit selon l'une des revendications 1 à 5, dans lequel le point de commutation d'un comparateur (5), auquel est appliqué un signal de détecteur (7) correspondant à la tension du détecteur, est déterminé par un diviseur de tension (6) à réglage fixe ou à réglage progressif.

7. Circuit de traitement des signaux produits par un détecteur de gaz à semi-conducteur (11) dans lequel le détecteur de gaz à semi-conducteur (11) forme un diviseur de tension avec une source de courant (13), caractérisé par le fait que le signal du détecteur est numérisé dans un convertisseur analogique-numérique (23) et transmis à un microprocesseur (15) qui compare le signal de détecteur numérisé à une valeur de référence mémorisée dans un registre et produit un signal de commutation lorsque le signal de détecteur numérisé est supérieur à la valeur de référence, la valeur de référence étant modifiée en fonction du signal de détecteur numérisé en ajoutant ou en supprimant chaque fois un bit au cours d'une boucle de temps de manière telle que, par intégration du signal de détecteur numérisé sur un intervalle de temps allant de quelques minutes à quelques heures, une valeur moyenne du signal de détecteur numérisé serve de valeur de référence et par le fait que le circuit est connecté aux volets de circulation d'air de véhicules automobiles et/ou de leur installation de climatisation.

8. Circuit selon la revendication 7, dans lequel au début du fonctionnement du détecteur de gaz à semi-conducteur (11) une sortie du micro-processeur (15) commute de manière permanente un transistor de commutation (12) qui envoie à un dispositif de chauffage du détecteur de gaz à semi-conducteur (11) une puissance supérieure à la puissance de chauffage nominale en fonctionnement du détecteur de gaz à semi-conducteur (11), cette sortie étant séquencée après un temps prédéterminé et le rapport de division de la fréquence d'horloge étant choisi de manière telle que la puissance de chauffage nominale en fonctionnement du détecteur de gaz à semi-conducteur (11) soit atteinte.

9. Circuit selon la revendication 7 ou 8, dans lequel, lorsque la teneur en substance polluantes de l'air extérieur dépasse un seuil prédéterminé, le rattrapage de la valeur de référence n'a pas lieu et une sortie (19) collecteur-ouvert reste commutée, laquelle sortie commute les volets de circulation d'air et/ou les installations de climatisation.

10. Circuit selon l'une des revendications 7 à 9 dans lequel un point de commutation interne n'est pas situé à distance fixe de la valeur de référence, et la distance entre le point de commutation et la valeur de référence diminue suivant une courbe caractéristique incurvée du détecteur de gaz à semi-conducteur (11) au fur et à mesure que la charge locale de substances polluantes dans l'air extérieur.

11. Circuit selon l'une des revendications 7 à 10, dans lequel, lorsque les signaux de détecteur sont inférieurs ou supérieurs à certaines valeurs, un signal de défaut est déclenché, lequel signal indique le court-circuit ou l'interruption de la liaison du détecteur.

12. Circuit selon l'une des revendications 7 à 11, dans lequel la fermeture des volets de circulation d'air et'ou des installations de climatisation est annulée après un certain laps de temps réglable.
